# EUROPÄISCHE PATENTSCHRIFT

(11) **EP 2 902 141 B1**
(45) Veröffentlichungstag und Bekanntmachung des Hinweises auf die Patenterteilung: **13.01.2021**
(21) Anmeldenummer: 15000213.7
(22) Anmeldetag: 26.01.2015
(51) Int. Cl.: B23B 31/117, B23B 31/02, F16B 21/18

(54) **System mit Anschlag für Werkzeugaufnahmen**
System with a limit stop for tool holders
Système avec butée pour porte-outils

(30) Priorität: 29.01.2014 DE 102014000994
(43) Veröffentlichungstag der Anmeldung: 05.08.2015
(73) Patentinhaber: Franz Haimer Maschinenbau KG, 86568 Hollenbach-Igenhausen (DE)
(72) Erfinder: Haimer, Franz, 86568 Igenhausen (DE)

(56) Entgegenhaltungen:
- DE-A1- 3 611 998
- DE-A1- 10 033 211
- GB-A- 339 455
- US-A- 2 157 516
- US-A1- 2011 198 818
- US-A1- 2013 328 275

## Beschreibung

Die Erfindung betrifft ein System nach dem Oberbegriff des Anspruchs 1 Ein solches System ist z.B. aus der US2013/0328275 A1 bekannt. Mittlerweile sind aus dem Stand der Technik verschiedene Werkzeugaufnahmen bekannt, die in der Aufnahmeöffnung auf der spindelabgewandten Seite Nuten oder Bohrungen aufweisen, um Kühl- oder Schmiermittel zu einer werkzeugseitigen Ausgabeöffnung zu leiten. Als Werkzeugaufnahmen werden im Allgemeinen Systeme verstanden die als Verbindung zwischen Werkzeug und Werkzeugmaschine genutzt werden. Werkzeugaufnahmen im Sinne dieser Anmeldung sind insbesondere Werkzeugaufnahmen zu verstehen die auf einer ihrer Seiten eine Möglichkeit zur Einspannung in eine Maschinenspindel aufweisen, etwa eine Steilkegel- oder Hohlschaftkegelaufnahme und auf einer anderen Seite eine Spannvorrichtung für Werkzeuge mit insbesondere zylinderförmiger Schaftform, etwa Fräser. Eine solche Spannvorrichtung für Werkzeuge kann beispielsweise als "Weldon"- oder "Whistle-Notch"-System, als Spannfutter mit Spannzange, als Hydrodehnspannfutter oder als Schrumpffutter ausgebildet sein. Ein solches System ist z.B. aus der deutschen Patentanmeldung DE 102008044996 A1 bekannt.

Dabei wird das Kühl- oder Schmiermittel, durch eine spindelseitige Öffnung von der Werkzeugmaschine kommend durch eine Durchgangsöffnung im Körper der Werkzeugaufnahme zum Aufnahmebereich für zylinderförmige Werkzeugschäfte geleitet. Dort kann das Kühl- oder Schmiermittel über eine Kühlmittelführung je nach Ausführungsform des Werkzeuges und der Werkzeugaufnahme zu einer werkzeugseitigen Aufnahmeöffnung geführt werden. Eine solche Kühlmittelführung besteht beispielsweise aus einer oder mehreren Bohrungen im Spannfutter, als einer oder mehreren Nuten die auf der Innenseite der für das Werkzeug vorgesehene Aufnahmeöffnung ausgebildet sind und durch ein eingeschobenes Werkzeug zur Mittelachse hin begrenzt werden, oder durch eine Kombination dieser Möglichkeiten.

Wird ein Werkzeugschaft zu weit in Aufnahmeöffnung eingeführt, besteht die Gefahr, dass eine ausreichende Zufuhr von Kühl - oder Schmiermittel nicht mehr möglich ist, oder dass die Versorgung vollständig unterbunden wird. Dies kann in der Folge dann sowohl zur Beschädigung des Werkzeugs als auch des bearbeiteten Werkstückes führen.

Eine gängige Möglichkeit dieses Problem zu lösen war bisher, einen gesonderten Kühlmittelkanal in die Werkzeugaufnahme zu bohren, der bereits im spindelseitigen Bereich abzweigt. Eine solche Methode ist zum einen aufwendig und damit teuer, da sie eine umfangreiche Nachbearbeitung der Werkzeughalters notwendig macht, zum anderen schwächt sie die Belastbarkeit des Werkzeughalters.

Die Aufgabe der Erfindung ist es, eine unkomplizierte und günstige Möglichkeit zu schaffen eine zuverlässige Versorgung mit Kühl- oder Schmiermittel zu gewährleisten, ohne die Werkzeugaufnahme zu schwächen.

Die Aufgabe wird durch die Merkmale des Anspruchs 1 gelöst, in dem ein einsetzbarer Anschlag in die Aufnahmeöffnung für den zylinderförmigen Werkzeugschaft eingesetzt wird.

Dies geschieht idealer Weise, indem er durch einen nachfolgend eingeführten Werkzeugschaft auf den Grund der Aufnahmeöffnung positioniert wird, wobei der einsetzbare Anschlag in ungenutzter Form einen Außenumfang aufweist, der größer oder mindestens ebenso groß ist wie der Innendurchmesser der Aufnahmeöffnung. Die durch die Innenseiten der Aufnahmeöffnung auf die außenliegenden, seitlichen Anlageflächen wirkenden Kräfte wird der einsetzbare Anschlag verformt und passt sich durch sein radial elastisches Verhalten den Innenseiten der Aufnahmeöffnung an.

In vielen Fällen endet die Aufnahmebohrung in einer zylindrischen Erweiterung, die einen geringfügig größeren Durchmesser aufweist als die Bohrung. In diesen Fällen kann sich der Anschlag wieder elastisch teilweise entspannen und sich dem Durchmesser der Erweiterung anpassen.

Durch die radiale Vorspannung ist der Anschlag spielfrei zentriert. In Verbindung mit einer bevorzugt zur Werkzeugachse symmetrischen Gestaltung des Anschlags erzeugt er keine oder nur eine sehr geringe Unwucht.

Die Dimensionierung des einsetzbaren Anschlags ist folglich von dem Innendurchmesser der Aufnahmeöffnung für den zylinderförmigen Werkzeugschaft abhängig. Die Wandstärke des einsetzbaren Anschlags wird so ausgewählt, dass sie zwar ein steifes Verhalten in axialer Richtung sicherstellt, gleichzeitig aber eine radial elastische Verformung erlaubt und den Kühl- oder Schmiermittelfluss nicht behindert.

Die weiteren Besonderheiten und Eigenschaften werden aus der Beschreibung eines bevorzugten Ausführungsbeispiels und anhand der Zeichnungen ersichtlich. Ergänzende zweckmäßige Ausgestaltungen der Erfindung sind den Unteransprüchen aufgeführt.

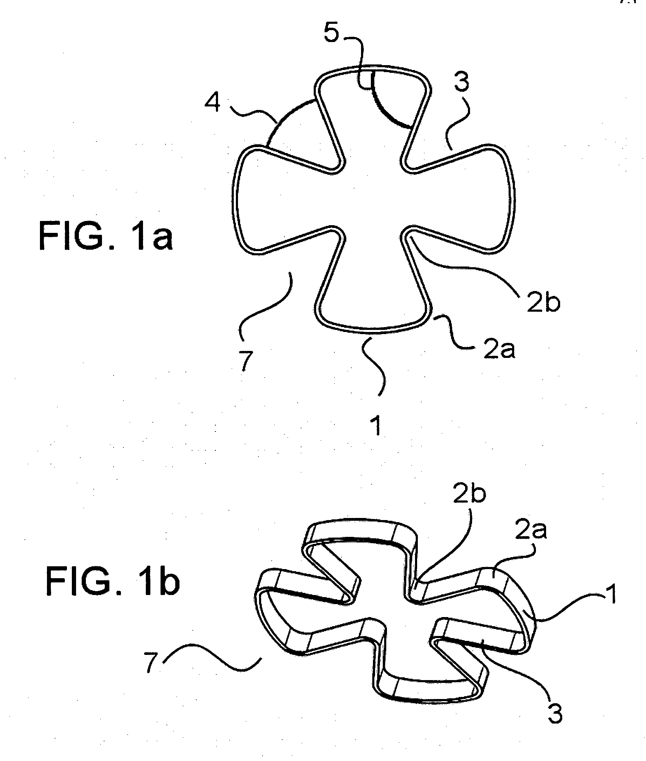

FIG. 1: Die Figur zeigt die bevorzugte Ausführungsform der Erfindung mit vier außenliegenden, seitlichen Anlageflächen (1) sowohl als zwei- (FIG. 1a) als auch als dreidimensionale (FIG. 1b) Abbildung.

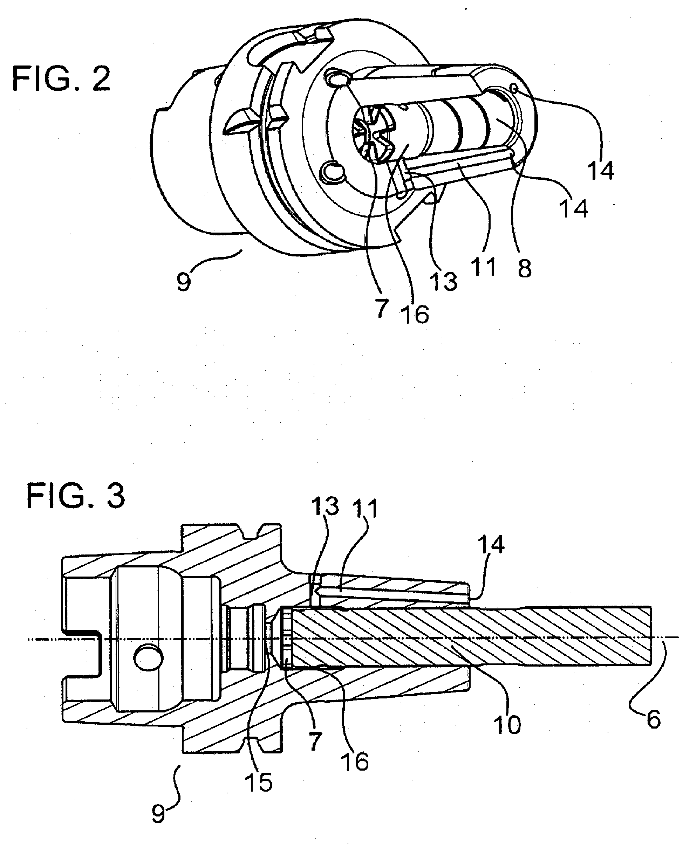

FIG. 2: Diese Figur zeigt den einsetzbaren Anschlag (7) in einer bevorzugten Ausführungsform in einer dreidimensionalen Schnittzeichnung, in eine Werkzeugaufnahme (9) eingesetzt, am Grund der Aufnahmeöffnung (8) für die Spannung eines zylinderförmigen Werkzeugschafts.
FIG. 3: Diese Figur zeigt den einsetzbaren Anschlag (7) in einer bevorzugten Ausführungsform in einer zweidimensionalen Schnittzeichnung, in eine Werkzeugaufnahme (9) eingesetzt, am Grund der Aufnahmeöffnung (8) und einem eingespannten Werkzeug (10) mit zylinderförmigem Schaft..

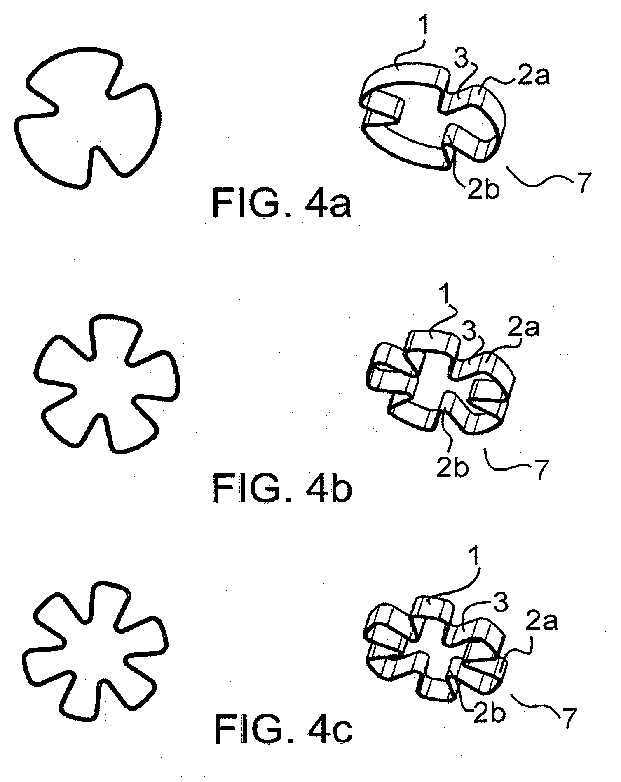

FIG. 4: Die Figuren 4a, 4b, 4c zeigen weitere erfindungsgemäße Ausführungsformen der Erfindung sowohl als zwei- als auch in dreidimensionaler Abbildung.

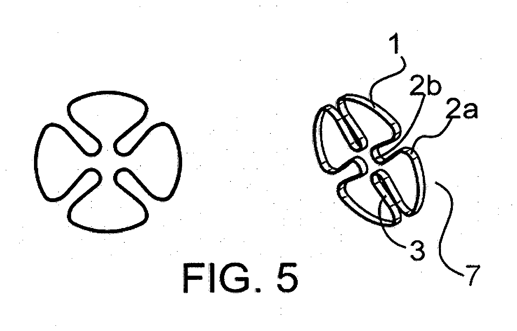

FIG. 5: Die Figur zeigt eine weitere erfindungsgemäße Ausführungsform bei der die Schenkel (3) eine leicht S-förmige Krümmung aufweisen.

In einer bevorzugten Ausführungsform weist der einsetzbare Anschlag (7) vier außenliegende, seitliche Anlageflächen (1) auf, die eine leichte, konvexe Krümmung aufweisen, um sich den Innenflächen der Aufnahmeöffnung (8) anzupassen. An den seitlichen Abschlüssen der Anlageflächen (1), sowie zwischen den Anlageflächen (1) befindet sich jeweils eine Biegestelle(2a, 2b). Die Biegestellen (2a, 2b) sind untereinander über im Wesentlichen gerade verlaufende Schenkel (3) verbunden, die zwischen den Anlageflächen (1) einen Winkel (4) von ungefähr 40° einschließen. Der Innenwinkel (5) zwischen einer Anlagefläche (1) und einem anliegenden Schenkel (3) beträgt außerdem ungefähr 70°. Die bevorzugte Ausführungsform weist somit Ähnlichkeiten mit einem Tatzenkreuz auf.

Erfindungsgemäß befindet sich jeweils eine Biegestelle (2a, 2b) an den seitlichen Abschlüssen der Anlageflächen (1), sowie zwischen den Anlageflächen (1), so dass die im Wesentlichen gerade verlaufenden Schenkel einander zugewandter Biegestellen (2a) zweier benachbarter Anlageflächen (1), die sich in der dazwischen liegenden Biegestelle (2b) treffen, einen spitzen Winkel einschließen. Dadurch bewegen sich die außenliegenden, seitlichen Anlageflächen (1) bei äußerer Krafteinwirkung aufeinander zu und drücken quer zur eigenen Bewegungsrichtung liegende, seitliche Anlageflächen (1) nicht von sich weg, wie es bei einem Winkel (4) größer 90° der Fall wäre. Dadurch werden bei der Verformung an den Innenseiten der Werkzeugaufnahme (8) alle Biegeelemente (2a, 2b) im Wesentlichen gleichmäßig belastet und der einsetzbare Anschlag im Wesentlichen gleichmäßig verformt.

Die Erfindung ist aber nicht auf diese Ausführungsform beschränkt, sondern kann in ihren Außenkonturen eine Vielzahl von Formen annehmen. So können statt vier Anlageflächen (1) auch zwei, drei, fünf oder beliebig viele außenliegende, seitliche Anlageflächen (1) ausgebildet sein.

Als grundsätzliche Bedingung in Sinne der Erfindung steht die Vorgabe, dass die Außenkontur es dem einsetzbaren Anschlag (7) ermöglichen muss ein radial elastisches Verhalten zu entfalten. Das bedeutet in diesem Zusammenhang, dass die, durch die Innenseiten der Aufnahmeöffnung (8) auf den einsetzbaren Anschlag (7) entstehenden Kräfte den einsetzbaren Anschlag (7) zwar im Sinne einer Verringerung seines Außenumfangs verformen, diese Verformung aber den Einsetzbaren Anschlag (7) aber nicht irreversibel deformiert. Gleichzeitig sorgt die reversible Verformung dafür, dass die außenliegenden, seitlichen Anlageflächen (1) an die an die Innenseite der Aufnahmeöffnung (8) gepresst bleiben, wodurch dieser auch bei einem Werkzeugwechsel in seiner Position verbleibt und so sichergestellt wird, dass der einsetzbare Anschlag in einer Ebene quer zur Rotationsachse (6) der Werkzeugaufnahme (9) bleibt und sich folglich nicht in einer Schieflage verkantet.

In einer bevorzugten Ausführung wird er einsetzbare Anschlag (7) aus Kunststoff, vorzugsweise aus Polyetheretherketon (PEEK), gefertigt. Andere Ausführungen sehen die Verwendung faserverstärkter Kunststoffe (FVK), zum Beispiel Carbonfaserverstärkter Kunststoffe (CFK) oder Glasfaserverstärkter Kunststoffe (GFK) vor. Natürlich sind auch andere Materialen etwa verschiedene metallische Legierungen wie z.B. Federstahl möglich. Auch andere Werk- oder Verbundstoffe können verwendet werden, sofern sie die, für die Anwendung in der Erfindung, notwendigen Voraussetzungen erfüllen. Neben der bereits aufgeführten radialen Elastizität und einem steifen Verhalten axialer Richtung, müssen die Werkstoffe auch eine gewisse Hitzeresistenz aufweisen. Sowohl gegen die, während der Bearbeitung eines Werkstückes auftretenden Temperaturen, als auch gegen jene, bei der Verwendung eines Schrumpffutters, bei einem Einsetzen des Werkzeuges (10) entstehenden. Es ergibt sich von selbst, dass die Härte des verwendeten Materials geringer sein sollte als die der Innenseite der Aufnahmeöffnung (8). Dies stellt zwar keine funktionelle Bedingung in Bezug auf die Erfindung dar, es ist aber nachvollziehbar, dass vermieden werden sollte, die Innenseite der Aufnahmeöffnung (8) durch den einsetzbaren Anschlag (7) zu beschädigen, z.B. durch Verkratzen. Eine weitere Eigenschaft, die das Material aufweisen sollte, ist eine Beständigkeit gegenüber den Kühl- oder Schmiermitteln. Damit ist sowohl eine chemische Reaktion wie Rost oder ein Auflösen der Kunststoffverbindung gemeint, als auch eine Reaktion auf die Temperatur des Kühlmittels, etwa ein Bruch durch zu starke Abkühlung.

Bei den Kühl- oder Schmiermitteln im Sinne dieser Erfindung kann es sich dabei um verschiedene flüssige oder gasförmige Medien oder auch Mischformen handeln, z.B. ein Nebel aus Luft und Öltröpfchen, ein Gemisch aus Öl und Wasser oder ein Fluid, dessen Siedetemperatur unter der Raumtemperatur liegt, z.B. CO₂.

Eine besonders vorteilhafte Ausbildung des erfindungsgemäßen System umfasst eine Werkzeugaufnahme (9) mit Kühlmittelleitsystem im Spannfutter und einen einsetzbaren Anschlag (7) für Werkzeugaufnahmen, wobei in der Werkzeugaufnahme (9) in Längsrichtung verlaufende Bohrungen (11) als Kühlmittelleitsystem angeordnet sind. Von einer, nicht dargestellten, spindelseitigen Zuführung, durch den Kühlmittelkanal (15) und den einsetzbaren Anschlag (7), zu einem, als Verbreiterung des unteren Bereichs der Aufnahmeöffnung (8), ausgebildeten Sammelraum (16) und von dort über die radialen Bohrungen (13) und die in Längsrichtung verlaufenden Bohrungen (11) kann ein Kühl- oder Schmiermittel zu Auslassöffnungen (14) geleitet werden. Insbesondere dann, wenn keine Hohlschraube in der Werkzeugaufnahme vorgesehen ist, die als verstellbarer Anschlag dient.

Eine weitere vorteilhafte nicht dargestellte Ausbildung des erfindungsgemäßen Systems umfasst eine Werkzeugaufnahme (9) mit Kühlmittelleitsystem im Spannfutter und einen einsetzbaren Anschlag für Werkzeugaufnahmen (9), wobei das Kühlmittelleitsystem als zumindest eine Flachnut an einer Innenseite der Aufnahmeöffnung (8) ausgebildet ist, welche an einem werkzeugseitigen Ende der Werkzeugaufnahme (9) in einer Auslassöffnung endet, die durch den Werkzeugschaft eines Werkzeuges (10) zur Rotationsachse (9) hin begrenzt wird, oder im Bereich des werkzeugseitigen Endes der Werkzeugaufnahme ein Stau- und/oder Sammelraum für Kühl- oder Schmiermittel vorhanden ist, in den die zumindest eine Flachnut mündet und wobei der Sammelraum mit einer Auslassöffnung verbunden ist, die als Ringspalt ausgebildet ist, wobei der Stau- und/oder Sammelraum und/oder der Ringspalt zumindest teilweise von einem Werkzeugschaft begrenzt werden.

## Patentansprüche

1. System mit einem zylinderförmigen Werkzeugschaft eines Werkzeugs (10), mit einer Werkzeugaufnahme mit einer Aufnahmeöffnung (8) zur Spannung des zylinderförmigen Werkzeugschafts und mit einem in die Aufnahmeöffnung (8) einsetzbaren Anschlag (7) für den zylinderförmigen Werkzeugschaft mit mindestens zwei radial außenliegenden, seitlichen Anlageflächen (1), welche an einer Innenseite der Aufnahmeöffnung anlegbar sind, wobei sich an seitlichen Abschlüssen der Anlageflächen (1) des Anschlags (7) und zwischen den Anlageflächen (1) des Anschlags (7) jeweils eine Biegestelle (2a, 2b) befindet und die Biegestellen (2a, 2b) über im Wesentlichen gerade verlaufenden Schenkel (3) verbunden sind, **dadurch gekennzeichnet, dass** die Schenkel (3) einander zugewandter Biegestellen (2a) zweier benachbarter Anlageflächen (1), die sich in der dazwischen liegenden Biegestelle (2b) treffen, einen spitzen Winkel einschließen und der einsetzbare Anschlag (7) ein radial elastisches Verhalten aufweist.

2. System nach Anspruch 1, **dadurch gekennzeichnet, dass** der Außendurchmesser des Anschlags (7) größer ist als der kleinste Durchmesser der Aufnahmeöffnung (8).

3. System nach einem der vorhergehenden Ansprüche, **dadurch gekennzeichnet, dass** der Anschlag (7) Öffnungen zur Durchleitung von Fluiden aufweist.

4. System nach einem der vorhergehenden Ansprüche, **dadurch gekennzeichnet, dass** der einsetzbare Anschlag (7) aus einem Material besteht, das einen geringeren Härtewert aufweist als die Aufnahmeöffnung (8) zur Aufnahme eines zylinderförmigen Werkzeugschafts.

5. System nach einem der vorhergehenden Ansprüche, **dadurch gekennzeichnet dass** der Anschlag (7) aus Kunststoff, vorzugsweise Peek, besteht.

6. System nach einem der vorhergehenden Ansprüche, **dadurch gekennzeichnet, dass** der Anschlag vier äußere Anlageflächen (1) aufweist, wobei der Innenwinkel (5) zwischen der äußeren Anlagefläche (1) und einem zugehörigen Schenkel (3) weniger als 90°, vorzugsweise etwa 70° beträgt.

7. System nach einem der vorhergehenden Ansprüche, **dadurch gekennzeichnet, dass** der Anschlag (7) aus einem Strang von im Wesentlichen konstanter Höhe und Dicke besteht, der bevorzugt in sich geschlossen ist.

8. System nach einem der vorhergehenden Ansprüche, **dadurch gekennzeichnet, dass**, der Anschlag eine Wandstärke von weniger als 2 mm aufweist.

9. System nach einem der vorhergehenden Ansprüche, **dadurch gekennzeichnet dass** die Wandstärke des Anschlags an den Biegestellen (2a, 2b) zwischen Anlagefläche (1) und Schenkel (3) und/oder zwischen zwei Schenkel (3) größer ist als an den Anlageflächen (1) und den Schenkeln (3).

10. System nach einem der vorhergehenden Ansprüche gekennzeichnet mit einem Spannfutter und einem Kühlmittelleitsystem im Spannfutter mit einem Kühlmittelkanal (15), wobei der Anschlag (7) in einer Art und Weise am Grund der Aufnahmeöffnung (8) positioniert wird, dass ein Verstopfen des Kühlmittelkanals (15) durch Einspannen eines Werkzeugs (10) verhindert wird und das Kühlmittel durch den einsetzbaren Anschlag (7) in das Kühlmittelleitsystem des Spannfutters fließen kann.

## Claims

1. System having a cylindrical tool shaft of a tool (10), having a tool receptacle having a receiving opening (8) for clamping the cylindrical tool shaft and having a stop (7), which is insertable into the receiving opening (8), for the cylindrical tool shaft having at least two radially external, lateral abutment faces (1), which are able to be placed against an inner side of the receiving opening, wherein a bending point (2a, 2b) is located respectively at the lateral ends of the abutment faces (1) of the stop (7) and between the abutment faces (1) of the stop (7), and the bending points (2a, 2b) are connected via legs (3) that extend substantially in a straight manner, **characterized in that** the legs (3) of mutually facing bending points (2a) of two adjacent abutment faces (1), which meet at the bending point (2b) located therebetween, enclose an acute angle and the insertable stop (7) behaves in a radially elastic manner.

2. System according to Claim 1, **characterized in that** the outside diameter of the stop (7) is greater than the smallest diameter of the receiving opening (8).

3. System according to either of the preceding claims, **characterized in that** the stop (7) has openings for the passage of fluids.

4. System according to one of the preceding claims, **characterized in that** the insertable stop (7) consists of a material that has a lower hardness than the receiving opening (8) for receiving a cylindrical tool shaft.

5. System according to one of the preceding claims, **characterized in that** the stop (7) consists of plastic, preferably PEEK.

6. System according to one of the preceding claims, **characterized in that** the stop has four outer abutment faces (1), wherein the internal angle (5) between the outer abutment face (1) and an associated leg (3) is less than 90°, preferably about 70°.

7. System according to one of the preceding claims, **characterized in that** the stop (7) consists of a strand with a substantially constant height and thickness, which is preferably self-contained.

8. System according to one of the preceding claims, **characterized in that** the stop has a wall thickness of less than 2 mm.

9. System according to one of the preceding claims, **characterized in that** the wall thickness of the stop at the bending points (2a, 2b) between abutment face (1) and leg (3) and/or between two legs (3) is greater than at the abutment faces (1) and the legs (3) .

10. System according to one of the preceding claims, **characterized by** a chuck and a coolant conducting system in the chuck having a coolant duct (15), wherein the stop (7) is positioned against the bottom of the receiving opening (8) in such a way that the coolant duct (15) is prevented from being blocked by a tool (10) being clamped in place, and the coolant can flow through the insertable stop (7) into the coolant conducting system of the chuck.

## Revendications

1. Système muni d'un arbre d'outil cylindrique d'un outil (10), muni d'un logement d'outil muni d'une ouverture de logement (8) pour le serrage de l'arbre d'outil cylindrique et muni d'une butée (7) insérable dans l'ouverture de logement (8) pour l'arbre d'outil cylindrique, munie d'au moins deux surfaces d'appui latérales (1), radialement extérieures, pouvant s'appuyer contre un côté intérieur de l'ouverture de logement, un emplacement de courbure (2a, 2b) se trouvant respectivement au niveau de terminaisons latérales des surfaces d'appui (1) de la butée (7) et entre les surfaces d'appui (1) de la butée (7), et les emplacements de courbure (2a, 2b) étant reliés par l'intermédiaire de branches essentiellement droites (3), **caractérisé en ce que** les branches (3) d'emplacements de courbure tournés l'un vers l'autre (2a) de deux surfaces d'appui voisines (1), qui se rencontrent dans l'emplacement de courbure (2b) situé entre elles, forment un angle aigu, et la butée insérable (7) présente un comportement radialement élastique.

2. Système selon la revendication 1, **caractérisé en ce que** le diamètre extérieur de la butée (7) est supérieur au diamètre le plus petit de l'ouverture de logement (8).

3. Système selon l'une quelconque des revendications précédentes, **caractérisé en ce que** la butée (7) comprend des ouvertures pour le passage de fluides.

4. Système selon l'une quelconque des revendications précédentes, **caractérisé en ce que** la butée insérable (7) est constituée par un matériau qui présente une valeur de dureté plus faible que l'ouverture de logement (8) pour le logement d'un arbre d'outil cylindrique.

5. Système selon l'une quelconque des revendications précédentes, **caractérisé en ce que** la butée (7) est constituée par de la matière plastique, de préférence Peek.

6. Système selon l'une quelconque des revendications précédentes, **caractérisé en ce que** la butée comprend quatre surfaces d'appui extérieures (1), l'angle intérieur (5) entre la surface d'appui extérieure (1) et une branche correspondante (3) étant inférieur à 90°, de préférence d'environ 70°.

7. Système selon l'une quelconque des revendications précédentes, **caractérisé en ce que** la butée (7) est constituée par une gaine de hauteur et épaisseur essentiellement constantes, qui est de préférence fermée sur elle-même.

8. Système selon l'une quelconque des revendications précédentes, **caractérisé en ce que** la butée présente une épaisseur de paroi inférieure à 2 mm.

9. Système selon l'une quelconque des revendications précédentes, **caractérisé en ce que** l'épaisseur de paroi de la butée au niveau des emplacements de courbure (2a, 2b) entre une surface d'appui (1) et une branche (3) et/ou entre deux branches (3) est supérieure à celle au niveau des surfaces d'appui (1) et des branches (3).

10. Système selon l'une quelconque des revendications précédentes, **caractérisé par** un mandrin de serrage et un système de conduction d'agent réfrigérant dans le mandrin de serrage muni d'un canal d'agent réfrigérant (15), la butée (7) étant positionnée sur la base de l'ouverture de logement (8) de telle sorte qu'un bouchage du canal d'agent réfrigérant (15) par serrage d'un outil (10) soit empêché et que l'agent réfrigérant puisse d'écouler au travers de la butée insérable (7) dans le système de conduction d'agent réfrigérant du mandrin de serrage.
